# EUROPEAN PATENT APPLICATION

(11) **EP 3 546 349 A1**
(43) Date of publication of application: **02.10.2019**
(21) Application number: 19161475.9
(22) Date of filing: 08.03.2019
(51) Int. Cl.: B64C 25/12, B64C 1/26, B64C 3/16

(54) **MULTI-FUNCTION STRUT**

(30) Priority: 29.03.2018 GB 201805160
(71) Applicant: Rolls-Royce plc, London SW1E 6AT (GB)
(72) Inventor: Moxon, Matthew, Derby, Derbyshire DE24 8BJ (GB)
(74) Representative: Rolls-Royce plc

(57) **Abstract**

A strut (30) for an aeroplane wing (82) comprises a first part (32) adapted to be connected at one end portion (36) to a fuselage (81) of the aeroplane (80); a second part (34) connected at a first end portion (40) to a second end portion (38) of the first part (32) and adapted to be connected at a second end portion (42) to either a wing (82), a pylon or a nacelle of the aeroplane, the second part (34) being angled to the first part (32) to define an inverted gull-strut arrangement. Either the first part (32) or the second part (34) comprises a compartment (44) to house a landing gear (31) in a folded configuration (Cl).

## Description

The present disclosure concerns a strut for an aeroplane wing, a wing assembly and an aeroplane incorporating the strut.

Conventional aeroplanes are comprised of one or a plurality of wings, which primarily serve to provide aerodynamic lift to support the aeroplane in flight, and one or (rarely) a plurality of fuselages, which contain the payload. It will be understood that a monoplane is an aeroplane which relies on a single wing for the provision of its aerodynamic lift.
Throughout the history of aircraft design, the reduction of structural weight has been of crucial importance. The weight of the structure is driven by requirements of both strength and stiffness. The minimum weight may be expected when the strength and stiffness requirements are exactly met, but not exceeded.
The strength of a structural element e.g. in tension is proportional to the strength of the material from which it is made, and its cross-sectional area.
The stiffness of a structural element is proportional to the elastic modulus of the material from which it is made, and the second moment of area of its cross section.

It may therefore be seen that:
- the shape of a structure of a fixed cross-sectional area may be modified to control its stiffness whilst retaining a fixed level of strength;
- the thickness (and therefore the cross-sectional area) of a structure of a fixed shape may be modified to control both its stiffness and strength;
- the above operations in combination may be used to meet performance requirements with the minimum total cross-sectional area, and thus the minimum total weight

The aerodynamic drag of bodies is comprised of:
- a term due to skin friction, which varies in proportion to the wetted area of the body;
- a term due to pressure losses caused by flow separation, which may be greatly reduced or avoided by careful design;
- a term due to lift production, which is driven by span-loading;
- a term due to the pressure loss caused by the production of any shock waves caused in the flow by the body;

It is generally found that the most efficient aeroplanes are those which combine the maximum practical wing span for their weight with the minimum practical wetted area to enclose their payload and structure.

In the early days of aviation, power was in short supply. Flight was therefore possible only at low speeds, and the chief design priorities were minimum weight and minimum drag due to lift production.
Aircraft from this period generally had at least two wings, in a biplane arrangement connected by struts and wires loaded in tension, to produce a truss structure. The structural depth produced by this arrangement was found to allow a very light structure to meet the stiffness requirements imposed aeroelastic considerations.
Progressive increases in power, and a particular emphasis upon high speed flight at low altitudes to win air-races and break world speed records, combined with a deeper understanding of the effects of Reynolds number upon aerofoil section performance, resulted in a general movement away from externally braced biplanes to cantilever monoplanes in the 1930s, which has continued to the present day.

Recent progress in aerodynamic and structural design has resulted in renewed interest in externally braced wing structures. Such structures offer performance improvements ultimately translating to a reduction in aircraft operating cost and therefore to reducing the cost and increasing the availability of air-travel.

The undercarriage of aeroplanes enables their movement on the ground. Ground movement may be split into several phases, each having different requirements: taxi, take-off, rejected take-off (RTO), and landing.

During taxi, the aircraft moves at low speed (c. 5-15 knots), e.g. between the gate and the runway. During this phase, the aircraft is required to negotiate corners. After landing at some airports, the aircraft may be expected to take a high-speed exit from the runway at a speed higher than the normal taxi speed. This is compensated for by the design of the exit, which generally has a larger turn radius.

During take-off, the aircraft accelerates in a straight line until it has reached sufficient speed to safely fly off. In the event that the take-off is rejected for some reason, the aircraft must brake to a stop from the take-off decision speed (VI). The maximum weight, maximum speed rejected take-off case is generally found to size the braking system, and may also size the wheels and tyres due to subsequent heat transfer from the brakes.

Certification requirements may indirectly impose lateral loading upon the landing gear, depending upon the design and location of the propulsion system, because e.g. they may require that deviation from the runway centreline in the event of an engine failure not exceed a specified value.

During landing, the residual sink rate and any lateral component of velocity ('drift') must be absorbed by the landing gear. The sink rate and maximum permissible deceleration rate requirements impose a minimum stroke upon the shock absorbing apparatus. Landing gear length in excess of this minimum constitutes a weight penalty.

Such additional length may be imposed by e.g. the ground angle required to enable the wing to achieve a desired lift coefficient on either or both of the instant of take-off rotation, or touch-down, in combination with the location of the landing gear attachment point.

The location of the landing gear attachment point is constrained longitudinally by the aircraft centre of gravity, and laterally by the same in combination with laterally loads imposed by e.g. taxi cornering or landing drift cancellation requirements.

Whereas it has generally been found that the landing gear may be attached to and retraced into the wing of the aircraft if that is mounted low on the fuselage, albeit possibly with recourse to the inclusion of a 'Yehudi' root chord extension, especially in designs having a swept wing, this is more challenging if the wing is mounted high on the fuselage, as is customary for regional turboprop and military transport aeroplanes due engine ground clearance constraints.

In these more difficult cases, the landing gear may be attached to the fuselage. This is undesirable, especially if the fuselage is pressurised, because structural weight and payload volume requirements are generally found to dictate that the landing gear retract into blister fairings external to the fuselage, which may impose a considerable drag penalty.

Accordingly, it is desirable to overcome the above mentioned problems.

According to a first aspect there is provided a strut for an aeroplane wing, comprising a first part adapted to be connected at one end portion to a fuselage of the aeroplane, and a second part connected at a first end portion to a second end portion of the first part and adapted to be connected at a second end portion to either a wing, a pylon or a nacelle of the aeroplane, the second part being angled to the first part to define an inverted gull-strut arrangement. Moreover, either the first part or the second part comprises a compartment to house a landing gear in a folded configuration.

The strut of the disclosure may therefore provide the necessary volume for landing gear retraction, obviating the need for fuselage blisters.
Simultaneously, the strut may serve as a passenger escape device, obviating the need for one or more inflatable escape slides, thereby reducing aircraft cost and weight. The strut may also incorporate kick steps for routine access. To this purpose, an emergency exit may be arranged in the fuselage in correspondence of the strut.
The strut may comprise a leading edge, a trailing edge, a first wall extending from the leading edge to the trailing edge, and a second wall extending from the leading edge to the trailing edge. In the present application, forward, or front, and aft, or rear, is with respect to the strut, i.e. the leading edge being forward, or in the front, and the trailing edge being aft, or in the rear, of the strut. Moreover, in the present application, a chordwise direction is a direction extending between the leading edge and the trailing edge of the strut and a thickness direction is a direction extending between the first wall of the strut and the second wall of the strut.

The first part may be angled to the second part by 70° to 150°, preferably 90° to 150°, more preferably 90° to 135°, further more preferably 90° to 120°. In substance, the strut may comprise an angled portion defined by the second end portion of the first part and the first end portion of the second part. The angled portion may be a V-shaped, or U-shaped portion. The V-shaped, or U-shaped portion may be arranged to point away from the wing. Moreover, the first part and the second part may feature respective first and second loci of centroids, wherein the first locus of centroids is angled to the second locus of centroids by 70° to 150°, preferably 90° to 150°, more preferably 90° to 135°, further more preferably 90° to 120°.
The first and second locus of centroids may be rectilinear at the angled portion and form a V.
Alternatively, the first and second locus of centroids may be curved at the angled portion of the strut and form a U, a concavity of which may face the wing. In this case, first and second tangents, respectively, of the first and second locus of centroids may form a V. The first tangent may be angled to the second tangent by 70° to 150°, preferably 90° to 150°, more preferably 90° to 135°, further more preferably 90° to 120°.

The first part may be made integral with the second part.

The first part may comprise the compartment to accommodate the landing gear.

The compartment may be a through aperture achieved either in the first or second part.

The compartment may be a blind housing achieved either in the first or second part.

The strut may further comprise one or more door to open and close the compartment.

The one or more door may rotate away from the wing, from a closed position, to open the compartment.

The strut may further comprise one or more further compartments to carry fuel and/or batteries and or electrical or hydraulic connections. As an example, the first part of the strut may comprise the compartment to house the landing gear and the second part of the strut may comprise one or more further compartments to carry fuel and/or batteries and or electrical or hydraulic connections.

According to a second aspect, there is provided a wing assembly comprising a wing; a strut according to the first aspect; and a landing gear which can be accommodated, in a folded configuration, in the compartment of either the first part or the second part of the strut.

The landing gear, in the folded configuration, may be flush with, or concealed by, either the first part or the second part of the strut. In other words, the strut, in correspondence of the compartment, features a thickness equal or larger than a transversal dimension of the landing gear.

The landing gear may be connected to the strut at a landing gear attachment point where the first part connects with the second part. In other words, the landing gear may be connected to a vertex of the V-shaped portion.
As the vertex of the V-shaped portion is the portion of the strut closest to the ground, the landing gear may be minimised in length.

The landing gear may be rotatable from a protruding configuration, wherein the landing gear protrudes from the strut, to the folded configuration within the compartment.
The landing gear may be in the protruding configuration for landing and takeoff purposes.

The landing gear may comprise a leg and a wheel, the wheel being connected to the leg. The leg may be rotatable about an axis parallel to the chordwise direction of the strut.

The second part may be angled to the wing by 10° to 60°, preferably 10° to 45°, more preferably 15° to 45°, further more preferably 20° to 30°.

In one example, the second part is connected to the wing.

According to a third aspect, there is provided an aeroplane comprising a wing assembly according to the second aspect; a fuselage featuring an external surface; and an engine housed in a nacelle. The first part of the strut may join the fuselage substantially normal to the external surface of the fuselage.

The engine may be a ducted or unducted engine. The engine may comprise a prime mover and propulsor. The prime mover may be any one of a gas turbine engine, piston engine, and electric motor, or any combination thereof to achieve a hybrid configuration. The propulsor may be either a ducted fan or a propeller.

By joining the fuselage external surface substantially normally, interference drag and strut wetted area may be reduced.
Generally, the strut may take a downward path as it leaves the fuselage, which allows to lower the landing gear attachment point, permitting a reduction in landing gear leg length, for example up to the minimum length imposed by landing sink rate deceleration requirements.
The short length of the landing gear legs means that the trailing edge of the strut at a spanwise location of the landing gear attachment point is close to the ground. This means that the first part of the strut may be used as a walkway or slide during passenger evacuation. It will be appreciated that the strut will serve this purpose irrespective of whether the aircraft has come to rest with its landing gear extended or retracted

Moreover, the strut may take an outward path as it leaves the fuselage, allowing to widen the track of the landing gear, enabling tip-over requirements to be met whilst allowing the landing gear legs to point nearly or exactly vertically downwards for maximum structural efficiency

The strut may serve to protect the fuselage of the aeroplane in the event that the landing gear should fail to extend for landing, or in case of hard landing. This reduces the weight penalty otherwise associated with reinforcing the fuselage against such an eventuality. Furthermore, the connection between the strut and the wing relieves the fuselage of carrying the weight of the wing and any equipment attached to it (e.g. propulsion system elements) during landing, and does so irrespective of whether the landing gear is extended or retracted.

The strut may be swept either forward or aft in planform as may be required, for example to reconcile structural requirements or reduce wave drag.

The second part of the strut may be connected at the second end portion to the nacelle.

In an example, the strut may support a plurality of engines.

In distributed propulsion installations, the strut may support a propulsor, or a plurality of propulsors.

In an example, the aeroplane may further comprise a pylon and the nacelle may be connected to the wing through the pylon, and the second part may be connected at the second end portion to the pylon.

The strut may comprise one or more further compartments to carry fuel and/or batteries to provide the engine with fuel and/or power, respectfully. To this purpose, the aeroplane may further comprise one or more ducts and/or one or more connectors housed in the strut to connect fuel and/or batteries housed in the one or more further compartments to the engine. The strut may comprise charging connectors, other ground power connectors or intercom connectors configured to be connected to ground equipment.

The strut may be embodied in aeroplanes having diverse landing gear arrangements, including (but not limited to) conventional tricycle arrangements, or tail-wheel arrangements.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic front view of an aeroplane comprising a strut according to an embodiment;
**Figure 3** is a section view along line A-A of the strut of figure 2;
**Figure 4** is a bottom view of the strut of figure 2;
**Figures 5-7** are partial transversal sections of an aeroplane with some component omitted for sake of simplicity according to different embodiments; and
**Figures 8-12** are schematic transversal sections of an aeroplane with some component omitted for sake of simplicity, according to different embodiments.

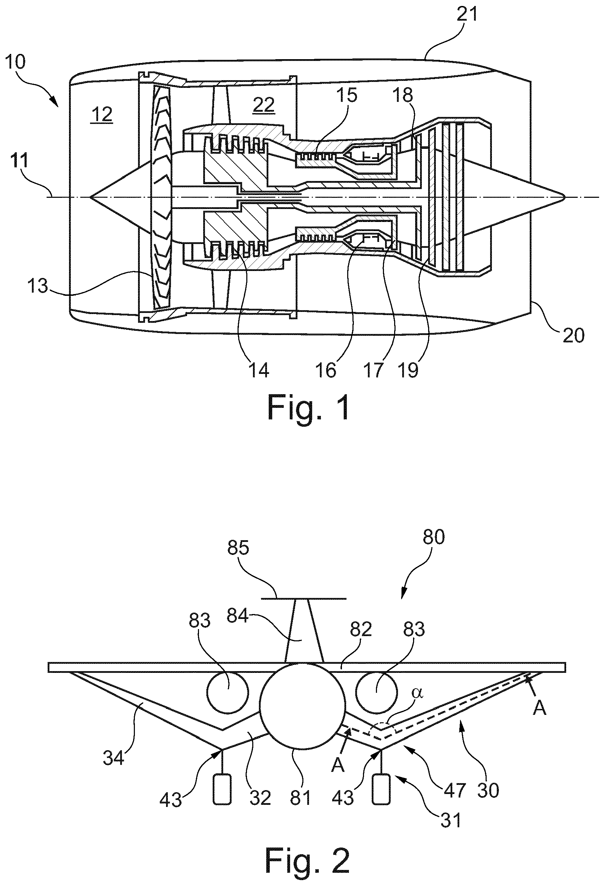

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two or one) and/or an alternative number of compressors and/or turbines. Further the engine may comprise a gearbox provided in the drive train from a turbine to a compressor and/or fan. Moreover, the present disclosure may be applied to electric or hybrid engines.

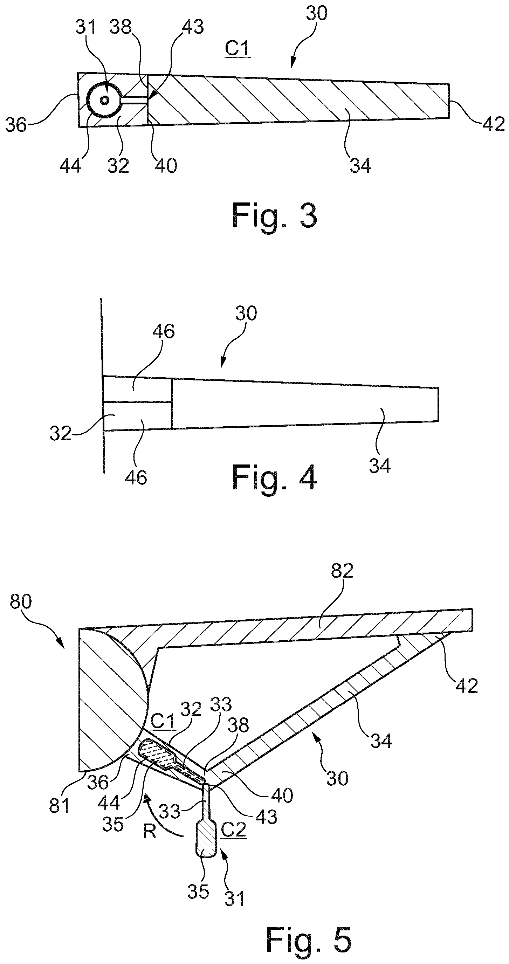

With reference to figure 2, an aeroplane is generally indicated at 80. The aeroplane 80 comprises a fuselage 81, a wing 82 connected to the fuselage 81, engines 83, for example of the type above described, a vertical stabiliser 84 and a horizontal stabiliser 85.
The engines 83 may be connected to the wing 102, as illustrated, or to other parts of the aeroplane, for example the fuselage 81.
The aeroplane 80 further comprises struts 30 connected at one end to the fuselage 81 and, at an opposing end, to the wing 82.
The aeroplane 80 comprises landing gear 31 connected to the struts 30.
With particular reference to figure 3-5, each strut 30 comprises a first part 32 and a second part 34.
At a first end 36, the first part 32 is connected to the fuselage 81. At a second end 38, the first part 32 is connected to a first end 40 of the second part 34, which is in turn connected at a second end 42 to the wing 82. The first part 32 is angled by an angle α to the second part 34 and both define an inverted gull-strut arrangement. In other words, the first part 32 and the second part 34 define a V-shaped portion 47. The angle α may be comprised between 70° and 150°, preferably 90° and 150°, more preferably 90° and 135°, further more preferably 90° and 120°.
The landing gear 31 is connected to the strut 30 at a landing gear attachment point 43, where the first part 32 connects with the second part 34.
The first part extend substantially normal to the fuselage 81.

The first part 32 comprises a compartment 44 to house the landing gear 31 in a folded configuration C1. The compartment 44 is a blind housing.
The strut 30 comprises two doors 46 configured to give access and close the compartment 44. The doors 46 are part of an aerofoil surface of the strut 30. When the landing gear 31 is in the folded configuration C1 and the doors 46 are closed, the landing gear 31 is concealed by the first part 32 of the strut 31.
In other not illustrated embodiment, the two doors 46 may be replaced by a single door, or may be completely omitted, leaving the compartment 44 open. In the latter example, the landing gear 31 may be concealed by, or flush with, the first part 32 of the strut 31 to minimise aerodynamic loses.

The landing gear 31 may rotate from the folded configuration C1 to a protruding configuration C2, wherein the landing gear 31 protrudes from the strut 31 for landing and takeoff purposes. Figure 5 illustrates in dashed line the landing gear 31 in the folded configuration C1 and in continuous line the landing gear 31 in the protruding configuration C2.
Figure 5 corresponds to figure 2, but some components like the engines 83, the vertical stabiliser 84 and the horizontal stabiliser 85 have been omitted for sake of simplicity.

In more detail, the landing gear 31 comprises a leg 33 and a wheel 35. The leg 33 is connected to the strut 30 at the landing gear attachment point 43. The leg 33 may pivot at the landing gear attachment point 43 along a rotation direction R. In substance, the leg 33 may rotate about a chordwise direction of the strut 30 passing through the landing gear attachment point 43. In other not illustrated embodiment, the landing gear 31 may rotate, or translate, along directions different from the rotation direction R to pass from the protruding configuration C2 to the folded configuration C1.

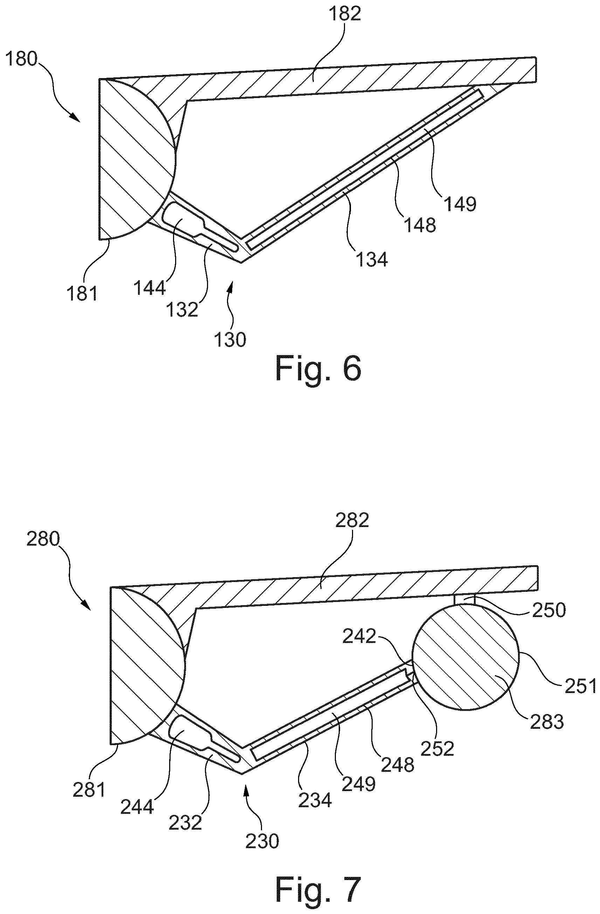

Further embodiments are illustrated in figures 6 to 11. Similar reference numerals are used for similar features as those previously described, but with a prefix of "1", "2", etc differentiating between the different embodiments. Mainly the differences between the embodiments will be described here.

In figure 6, there is illustrated a partial transversal sections of an aeroplane 180, wherein the landing gear, the engine, the vertical stabiliser and the horizontal stabiliser have been omitted for sake of simplicity. The aeroplane 180 comprises the strut 130 that is connected to the fuselage 181 at one end and, at an opposing end, to the wing 182. The strut 130 comprises a first part 132 and a second part 134. The first part 132 comprises the compartment 144 to house the landing gear. The second part 134 comprises one further compartment 148 to carry fuel, or batteries, 149 for the engine.

In figure 7, there is illustrated a partial transversal sections of an aeroplane 280, wherein the landing gear, the vertical stabiliser and the horizontal stabiliser have been omitted for sake of simplicity. The aeroplane 280 comprises the engine 283 housed in the nacelle 251 connected to the wing 282 by means of the pylon 250. The strut 230 is connected to the fuselage 281 at one end and, at an opposing end, to the nacelle 251. In more detail, the first part 232 of the strut 230 is connected at the first end portion 236 to the fuselage 281, whereas the second part 234 of the strut 230 is connected at the second end portion 242 to the nacelle 251. The compartment 244 is achieved in the first part 232 of the strut 230 and the further compartment 248 is achieved in the second part 234 of the strut 230. Fuel and/or batteries and/or electrical or hydraulic connections 249 are housed in the further compartment 248. Connectors or ducts 252 housed in the strut 230, in particular in the second part 234 of the strut 230, connect the fuel and/or batteries and/or electrical or hydraulic connections 249 housed in the further compartment 248 to the engine 283.

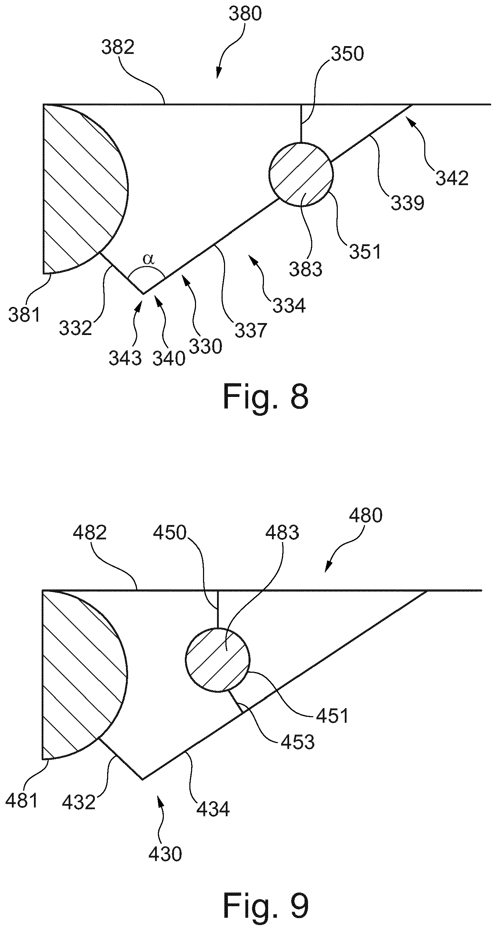

In figures 8-12, there are illustrated further strut arrangements. For sake of simplicity, the strut and the wing are schematised by lines (which may be seen as respective loci of the centroids) and, as in the embodiments of figures 6 and 7, the landing gear, the vertical stabiliser and the horizontal stabiliser have been omitted.
It is understood that in the embodiment of figures 8-11 the compartment for housing the landing gear (not illustrated) may be provided either in the first or in the second part of the strut. Moreover, a further compartment may be provided either in the second or in the first part of the strut. As in the previous embodiments, the landing gear may be connected to the strut at the landing gear attachment point provided between the first part and the second part of the strut, and may rotate from the protruding configuration C2 to the folded configuration C1.

An aeroplane 380 is schematised in figure 8. The engine 383 is connected to the wing 382 through the pylon 350 and to the second part 334 of the strut 330. In detail, the second part 334 of the strut 330 comprises a lower portion 337 and an upper portion 339. The lower portion 337 comprises the first end 340 connected to the second end 338 of the first part 332 and, opposite to the first end 340, is connected to the nacelle 351 of the engine 383. The upper portion 339 comprises the second end 342 connected to the wing 382 and, opposite to the second end 342, is connected to the nacelle 351 of the engine 383. In other words, differently from the embodiment of figure 7, the strut 330 extends past the engine 383. As the strut 330 may provide sufficient support for the engine 383, in a not illustrated embodiment, the pylon 350 may be omitted. The first part 332 of the strut 330, as in the previous embodiments, is connected to the fuselage 381 and forms an angle α with the second part 334.

In the aeroplane 480 illustrated in figure 9, the engine 483 housed in the nacelle 451 is connected both to the wing 482 and the strut 430 through an upper pylon 450 and a lower pylon 453. In detail, the upper pylon 450 is connected at one end to the wing 482 and at an opposing end to the nacelle 451, and the lower pylon 453 is connected at one end to the nacelle 451 and at an opposing end to the second part 434 of the strut 430. The upper pylon 450 is substantially vertical. The lower pylon 453 is arranged perpendicularly to the second part 434. In practice, the upper pylon 450 is angled to the lower pylon 453. In other not illustrated embodiments, the lower pylon 453 may be arranged with different orientation, for example to connect with the first part 432 of the strut 430 and the nacelle 451. In one embodiment, the upper pylon 450 and/or the lower pylon 453 may be arranged parallel to the second part 434 of the strut 430.
In other not illustrated embodiments, the upper pylon 450 and lower pylon 453 may be mutually parallel and vertically aligned. In this regard, the lower pylon 453 may be angled, but not perpendicular, to the second part 434.
The first part 432 of the strut 430, as in the previous embodiments, is connected to the fuselage 481 and arranged substantially normal thereto.

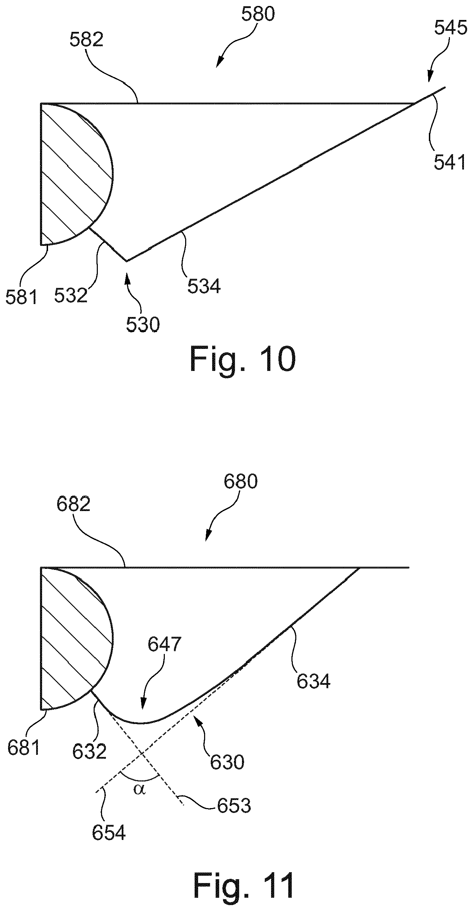

Figure 10 illustrates a further embodiment of aeroplane 580. For sake of simplicity, the engine has been omitted, but may be arranged as in any one of the embodiments of the preceding figures 2, 8 and 9, or may be connected to the fuselage 581. The strut 530 comprises the first part 532 connected at one end to the fuselage 581 and, at an opposing end, to the second part 534. The strut 530 differs from the previous embodiments in that it extends past the wing 582. In practice, the strut 530 further comprises an extension portion 541 extending from the second part 534 and defining a wingtip device 541. The strut 530, provided with the extension portion 541, may allow to protect the wing 582 from tip-over. Although illustrated as a rectilinear extension of the second part 534, the extension portion 541 may feature any other suitable shape, for example curved or angled to the second part 534, to improve efficiency and reduce drag.

Figure 11 illustrates a further embodiment of aeroplane 680. For sake of simplicity, the engine has been omitted, but as for the embodiment of figure 10, the engine may be arranged as in any one of the embodiments of the preceding figures 2, 8 and 9, or may be connected to the fuselage 681. In the aeroplane 680 of figure 11, the first part 632 is angled to the second part 634 and both form a U-shaped portion 647. In other words, a fillet or curved contour is defined at the junction of the first part 632 and the second part 634.
For example, the first part 632 may be angled to the second part 634 by 70° to 150°, preferably 90° to 150°, more preferably 90° to 135°, further more preferably 90° to 120°. Tangents 653 and 654 to the first part 632 and the second part 634, respectively, form an angle α of 70° to 150°, preferably 90° to 150°, more preferably 90° to 135°, further more preferably 90° to 120°.
The U-shaped portion 647 may replace the V-shaped portion in any one of the preceding embodiment.

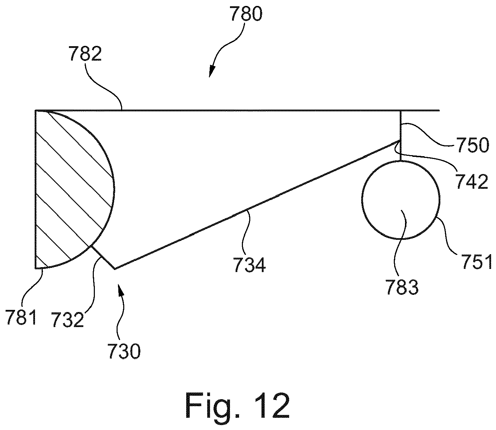

Figure 12 illustrates a further embodiment of aeroplane 780. The nacelle 751, housing the engine 783, is connected to the wing 782 through the pylon 750. The strut 730 comprises the first part 732 connected to the fuselage 781 and the second part 734, the second end 742 of which is connected to the pylon 750. In other words, the pylon 750 connects the wing 782 to the nacelle 751 and the second end 742 of the second part 734 of the strut 730.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. Strut (30) for an aeroplane wing (82), comprising:
- a first part (32) adapted to be connected at one end portion (36) to a fuselage (81) of the aeroplane (80),
- a second part (34) connected at a first end portion (40) to a second end portion (38) of the first part (32) and adapted to be connected at a second end portion (42) to either a wing (82), a pylon or a nacelle of the aeroplane, the second part (34) being angled to the first part (32) to define an inverted gull-strut arrangement,
**characterised in that** either the first part (32) or the second part (34) comprises a compartment (44) to house a landing gear (31) in a folded configuration (C1).

2. Strut (30) according to the preceding claim, wherein the first part (32) is angled to the second part (34) by 70° to 150°, preferably 90° to 150°, more preferably 90° to 135°, further more preferably 90° to 120°.

3. Strut (30) according to any one of the preceding claims, wherein the first part (32) comprises the compartment (44) to accommodate the landing gear (31).

4. Strut according to any one of preceding claims, wherein the compartment (44) is a through aperture achieved either in the first (32) or second part (34), or wherein the compartment (44) is a blind housing achieved either in the first (32) or second part (34).

5. Strut according to any one of the preceding claims, further comprising one or more door (46) to open and close the compartment (44), and optionally wherein the one or more door (46) rotate away from the wing (82), from a closed position, to open the compartment (44).

6. Strut according to any one of the preceding claims, comprising one or more further compartments (148, 248) to carry fuel and/or batteries and/or electrical or hydraulic connections (149, 249).

7. Wing assembly comprising:
- a wing (82);
- a strut (30) according to any one of the preceding claims; and
- a landing gear (31) which can be accommodated, in a folded configuration (C1), in the compartment (44) of either the first part (32) or the second part (34) of the strut (30).

8. Wing assembly according to the preceding claim, wherein the landing gear (31), in the folded configuration (C1), is flush with, or concealed by, either the first part (32) or the second part (34) of the strut (30), and optionally wherein the landing gear (31) is connected to the strut (30) at a landing gear attachment point (43) where the first part (32) connects with the second part (34).

9. Wing assembly according to any one of claims 7 and 8, wherein the landing gear (31) is rotatable from a protruding configuration (C2), wherein the landing gear (31) protrudes from the strut (30), to the folded configuration (C1) within the compartment (44).

10. Wing assembly according to the preceding claim, wherein the landing gear (31) comprises a leg (33) and a wheel (35), the wheel (35) being connected to the leg (33), and wherein the leg (33) is rotatable about an axis parallel to a chordwise direction of the strut (30).

11. Wing assembly according to any one of claims 7 to 10, wherein the second part (34) is angled to the wing (82) by 10° to 60°, preferably 10° to 45°, more preferably 15° to 45°, further more preferably 20° to 30°.

12. Aeroplane comprising:
- a wing assembly according to any one of claims 7 to 11;
- a fuselage (81) featuring an external surface; and
- an engine (83) housed in a nacelle,
wherein the first part (32) of the strut (30) joins the fuselage (81) substantially normal to the external surface of the fuselage (81).

13. Aeroplane (80) according to the preceding claim, wherein the second part (234) is connected at the second end portion to the nacelle (251).

14. Aeroplane according to claim 12, further comprising a pylon (750), the nacelle (751) being connected to the wing (782) through the pylon (750), wherein the second part (734) is connected at the second end portion (742) to the pylon.

15. Aeroplane according to any one of claims 12 to 14, wherein the strut (130) comprises one or more further compartments (148) to carry fuel and/or batteries (149) to provide the engine with fuel and/or power, respectfully, and optionally further comprising one or more ducts and/or one or more connectors (252) housed in the strut (230) to connect fuel and/or batteries (249) housed in the one or more further compartments (248) to the engine .
